# EUROPÄISCHE PATENTANMELDUNG

(11) **EP 0 743 328 A2**
(43) Veröffentlichungstag der Anmeldung: **20.11.1996**
(21) Anmeldenummer: 95119538.7
(22) Anmeldetag: 12.12.1995
(51) Int. Cl.: C08F 20/12, C08F 2/14

(54) **Verfahren zur Herstellung von Polymethacrylat-Teilchen**

(30) Priorität: 23.12.1994 DE 4446366
(71) Anmelder: Röhm GmbH, 64293 Darmstadt (DE)
(72) Erfinder: Siol, Werner, Dr., D-64297 Darmstadt (DE); Parusel, Markus, D-64409 Messel (DE)

(57) **Zusammenfassung**

Die Erfindung betrifft ein Verfahren zur Herstellung von Poly(meth)acrylat- teilchen mit einem Durchmesser von 1 - 50 µm nach dem Verfahren der Fällungspolymerisation, wobei man Monomere M enthaltend zu mindestens 60 Gew.-% Monomere der Formel I 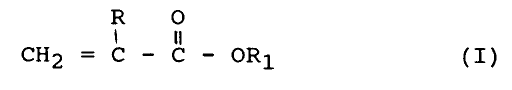
worin R Wasserstoff oder Methyl und R₁ einen Alkylrest mit 1 bis 8 Kohlenstoffatomen, einen gegebenenfalls substituierten Arylrest mit bis zu 14 Kohlenstoffatomen oder einen Aralkylrest bedeutet in einer Verbindung der Formeln II oder II' 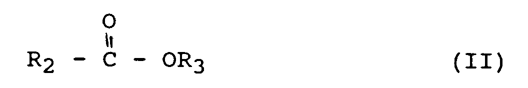
oder

R₄ - O - H (II')

worin R₂ für einen geradkettigen oder verzweigten, gesättigten Alkylrest mit 7 bis 23 Kohlenstoffatomen, R₃ für Wasserstoff oder einen geradkettigen oder verzweigten Alkylrest mit 1 bis 24 Kohlenstoffatomen und R₄ für einen gerad- kettigen oder verzweigten, gesättigten Alkylrest mit 10 - 22 Kohlenstoffatomen steht, als kontinuierliche Phase bei der Polymerisation und in Gegenwart eines Emulgators und eines Radikalinitiators polymerisiert.

## Beschreibung

### Gebiet der Erfindung

Die Erfindung betrifft ein Verfahren zur Herstellung von Polymethacrylat-Teilchen mit einem Durchmesser von 1 bis 50 µm.

### Stand der Technik

Die Praxis verzeichnet einen steigenden Bedarf an Kunststoffen in Form von formstabilen Kunststoff-Teilchen mit einer definierten, einheitlichen Teilchengröße. Ein besonderes Interesse kommt dem Teilchengrößenbereich 1 - 50 µm zu bzw. dem noch engeren Bereich 2 - 20 µm. Teilchen dieses Typs finden z.B. Anwendung als Abstandshalter (Displays, Folien), als Oberflächen-modifizierungsmittel, als Trägermaterial in der Diagnostik usw. Das Hauptinteresse besteht aber im Bereich der optischen Industrie, die speziell mit Teilchen in diesem Größenbereich bei exakt einstellbarem Brechungsunterschied zu einer gegebenen Polymermatrix die unterschiedlichen Lichteffekte realisieren kann.
Dabei ist das Anforderungsprofil an derartige Teilchen mit einem Durchmesser von ca. 2 - 20 µm seit langem bekannt: es fehlt nur an einem praktikablen Verfahren zur Herstellung solcher Teilchen. So versagt die klassische Methode zur Herstellung definierter Teilchen, die Emulsionspolymerisation in diesem Teilchengrößenbereich (vgl. Ullmanns Encyclopedia of Industrial Chemistry, 5th. Ed. Vol. A21, pp. 168, 373 - 387 VCH 1992, Becker-Braun, Kunststoff-Handbuch, Bd. 1., S. 26 - 28 Carl Hanser 1990).
Auf dem Wege der Emulsionspolymerisation lassen sich in der Regel nur Teilchen mit einem Durchmesser < 2 µm problemlos herstellen. Die Bemühungen größere Teilchen herzustellen, führen im allgemeinen zu Teilchenneubildungen, also multimodalen Teilchengrößenverteilungen.
Gemäß Literaturangaben soll es gelingen, durch mehrfaches Anquellenlassen von wäßrigen Dispersionen mit Monomeren Teilchen der genannten Größe herzustellen (vgl. Ugelstad, J. Mork, P.C., Kaggurud, K.H., Ellingsen, T., and Berge, A., Adv. Colloid Interface Sci. 13, 101 (1980).
Das angegebene Verfahren ist jedoch äußerst kompliziert.
Ein weiteres Verfahren zur Herstellung dieser Teilchen in einer Umgebung mit Mikrogravitation (Durchführung in Space-Shuttle unter Weltraumbedingungen) verspricht ebenfalls kaum eine industrielle Anwendung (vgl. Vanderhoff, J.W., El-Asser, M.S., Micale, F.J., Sudol, E.D., Tseng, C.M. Silwanowicz, A., Sheu, H.R., and Kornfeld, D.M., Polym. Mater. Sci. Eng. Prepr. 54, 587 (1986). Somit bleibt nur die Feststellung übrig, daß bislang keine industriell anwendbare Methode existiert, derartige Teilchen in Wasser als Reaktionsmedium herzustellen.
Auch die klassische Suspensionspolymerisation, bei der bekanntlich die Teilchendurchmesser primär durch die Rührgeschwindigkeit gesteuert werden, kommt im allgemeinen nicht in die Größenordnung von 2 - 20 µm. Darüber hinaus sind diese Teilchen nicht monodispers, sondern fallen in breiter Verteilung an.

Wesentlich günstiger sind die Möglichkeiten, monodisperse PMMA-Teilchen mit einem Durchmesser von 2 - 20 µm zu gewinnen, wenn man die Teilchen nach dem Prinzip der Fällungspolymerisation im organischen Medium unter Einsatz eines organischen Verteilers herstellt.
Dementsprechend groß ist die Zahl von Veröffentlichungen zu diesem Thema. Die Fällungspolymerisation von PMMA in Kohlenwasserstoffen als Lösemittel wurden bereits in den Dreißigerjahren vorgeschlagen (US-A 2 125 443, DE 662 157). Über hundert Schutzrechte und zahlreiche sonstige Literaturstellen haben sich seither mit der Polymerisation von Alkyl(meth)acrylaten in nicht-wäßrigen Dispersionen beschäftigt.
In vielen der einschlägigen Schutzrechte werden reine Lackanwendungen beschrieben: stabile, sehr feinteilige organische Dispersionen. Darüber hinaus gibt es auch Arbeiten, die den Einfluß der Emulgatoren, der Initiatoren und der Lösemittelgüte auf die Teilchengröße untersuchen. Eine sehr informative Zusammenfassung der Dispersionspolymerisation von Methylmethacrylat in nicht-wäßrigen Medien wird in Winnik, M.A. et al., Makromol. chem. Macromol. Symp. 10/11, 483 - 501 (1987) gegeben.

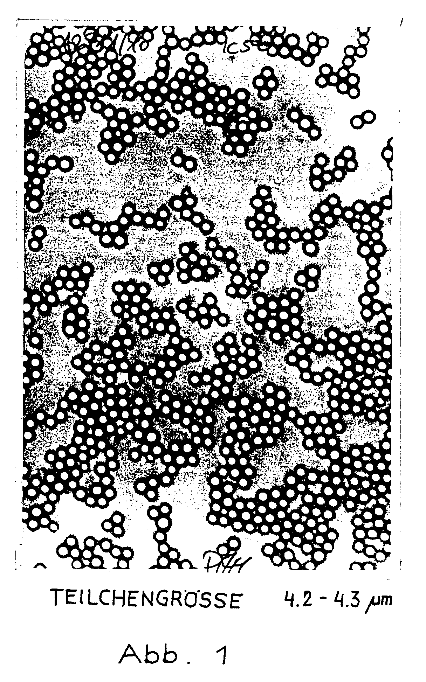

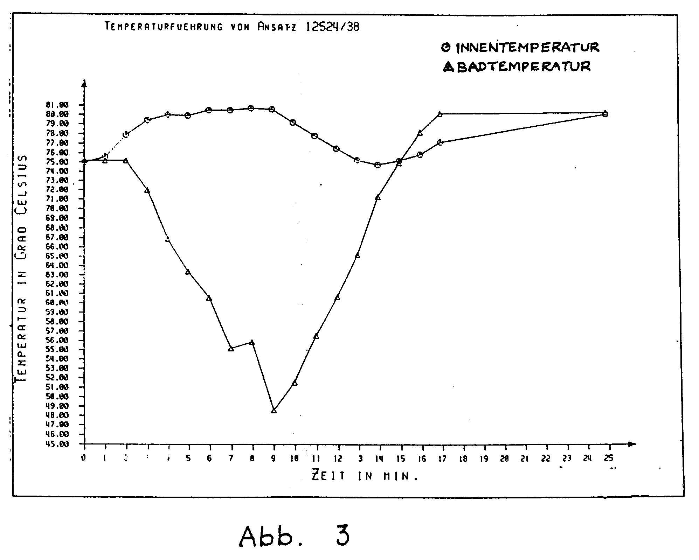

Als Emulgatoren für die Dispersionspolymerisation werden vor allem Blockcopolymere eingesetzt. Ein Überblick über gängige Polymerisationsbedingungen wird in Winnik et al., loc.cit., Table 1, S. 485 gegeben.
Wie aus dieser Arbeit ferner hervorgeht, läßt sich die Teilchengröße über die Konzentration des Emulgators (Fig. 1), die Initiatorkonzentration (Fig. 5) sowie über den Feststoffgehalt (Fig. 3) und die Lösemittelgüte (Fig. 4) steuern. Die dortigen Abbildungen lassen erkennen, daß eine Steuerung zu großen Teilchen (> 3 µm) vor allem mit Tetrachlorkohlenstoff/Alkan-Mischungen möglich ist.
Ohne Zusatz von Halogen-Kohlenwasserstoffen findet man dagegen Bereiche, in denen eine Teilchengrößensteuerung überhaupt nicht möglich ist. Hier erhält man Koagulation.

### Aufgabe und Lösung

Die Verwendung halogenierter Kohlenwasserstoffe im gewerblichen Bereich ist aus oekologischen und toxikologischen Gründen heutzutage weitgehend eingeschränkt. Auf der anderen Seite bestand weiterhin die eingangs erwähnte Aufgabe, in gut steuerbarer Weise monodisperse Poly(meth)acrylat-Partikel, vorzugsweise im Teilchengrößenbereich 1 - 50 µm zur Verfügung zu stellen. Diese Aufgabe wird durch das erfindungsgemäße Verfahren in hervorragender Weise gelöst.
Die Erfindung betrifft somit ein Verfahren zur Herstellung von Poly(meth)acrylatteilchen nach dem Verfahren der Fällungspolymerisation, wobei man die Monomeren M enthaltend zu mindestens 60 Gew.-% Monomere der Formel I 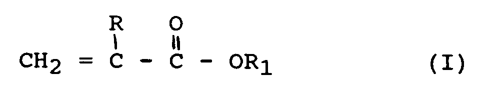
worin R Wasserstoff oder Methyl und R₁ einen Alkylrest mit 1 bis 8 Kohlenstoffatomen, einen gegebenenfalls substituierten Arylrest mit bis zu 14 Kohlenstoffatomen, insbesondere Phenyl oder einen Aralkyl- insbesondere einen Benzylrest bedeutet in einer Verbindung der Formel II 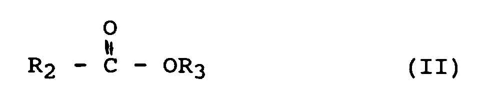
oder

R₄ - O - H (II')

worin R₂ für einen geradkettigen oder verzweigten gesättigten Alkylrest mit 7 bis 23 Kohlenstoffatomen, R₃ für Wasserstoff oder einen geradkettigen oder verzweigten Alkylrest mit 1 bis 24 Kohlenstoffatomen und R₄ für einen geradkettigen oder verzweigten, gesättigten Alkylrest mit 10 - 22 Kohlenstoffatomen steht, als kontinuierliche Phase bei der Polymerisation und in Gegenwart eines Emulgators, vorzugsweise eines Blockcopolymeren mit Polystyrolanteilen BCP und in Anwesenheit eines Radikalinitiators IN in Anteilen von 0,02 bis 2 Gew.-% bezogen auf die Monomeren, polymerisiert.
Unter den Monomeren der Formel I seien in erster Linie das Methylmethacrylat, vorzugsweise in Anteilen von mindestens 20, vorzugsweise 40 und bis zu 100 Gew.-% bezogen auf die Monomeren M, ggfls. zusammen mit anderen Monomeren, insbesondere mit Methylacrylat, Ethyl(meth)acrylat, Butyl(meth)acrylat, 2-Ethylhexyl(meth)acrylat in Mengen bis zu 60 Gew.-Teilen verstanden. Zur Erhöhung des Brechungsindex werden bevorzugt Aryl- bzw. Aralkyl(meth)acrylate mit 6 bis 14 Kohlenstoffatomen im Esterteil, insbesondere Phenyl-, Tolyl-, Naphthyl-, Benzyl-, Phenylpropyl-, Phenethyl(meth)-acrylate in Anteilen von 1 - 80 Gew.-% eingesetzt. Der Anteil an Vinylaromaten wie Styrol und seinen Homologen wird zweckmäßig auf < 20 Gew.-% bezogen auf M zu begrenzen sein, da diese Monomere den Polymerisationsverlauf erheblich stören.

Durch die Mitverwendung hydrophiler Monomerer läßt sich die Teilchengröße in Richtung Teilchenverkleinerung steuern. Als derartige hydrophile Monomere kommen z.B. Methacylsäurehydroxyester mit C₂- bis C₁₂-Alkylresten sowie entsprechende Amide infrage.
Hydrophobe Comonomere wie z.B. die oben genannten Isobutylmethacrylate, Phenylmethacrylate, Butylmethacrylate, die in Mengen von 0 bis ca. 70 Gew.-% bezogen auf die Monomeren M eingesetzt werden können, steuern die Teilchengröße in Richtung Teilchenvergrößerung. Desweiteren können Teilchen durch Mitverwendung von Pfropfvernetzern, d.h. Monomeren mit zwei radikalisch polymerisierbaren Gruppen verschiedener Reaktivität wie z.B. Allyl(meth)acrylat in Anteilen von 0,1 bis 20 Gew.-Teilen bezogen auf die Monomeren vernetzt werden. Die Verwendung von vernetzenden Monomeren mit gleichartigen polymerisationsfähigen Einheiten, z.B. der (Meth)acrylsäureester von mehrwertigen Alkoholen ist, falls angewendet, dagegen auf < 1 Gew.-Teil bezogen auf die Monomeren zu beschränken. Besonderes Interesse der Technik können die erfindungsgemäßen Teilchen aus Polymeren der Zusammensetzung Methylmethacrylat/Benzyl(meth)acrylat ggfls. vernetzt mit z.B. Allyl(meth)acrylat beanspruchen, die sich in einen sehr engen Teilchengrößenbereich (Durchmesser 2 - 10 µm) herstellen lassen. Die Polymerisate, die die erfindungsgemäß hergestellten Teilchen bilden, soweit nicht vernetzt, haben in der Regel ein Molekulargewicht M_{w} im Bereich 10⁴ bis 10⁷ (Bestimmung mittels Lichtstreuung, vgl. H.F. Mark et.al. Encyclopedia of Polymer Science & Technology, Vol. 10, pg. 1 - 19, J. Wiley 1987).
Die als Emulgatoren wirkenden Blockcopolymeren BCP sind in der Regel Blockcopolymere mit Polystyrolanteilen. Diese BCP sind vorzugsweise ausgewählt aus der Gruppe, aufgebaut aus einem Polystyrol und einem Ethylen-co-propylen-Block (= hydriertes Polyisopren) oder aus einem Polystyrol und einem Ethylen-co-butylen-Block (= hydriertes Polybutadien) bzw. aus Polystyrol und Polyisopren bzw. Polystyrol und Polybutadien.
Der Anteil des Polystyrolblocks zu dem anderen Blockcopolymeranteil in BCP liegt in der Regel bei 20 bis 80 Gew.-%.
Die Blockcopolymeren BCP besitzen im allgemeinen ein Molekulargewicht im Bereich M_{w} = 24.000 - 200.000, bevorzugt 50.000 - 130.000 Dalton.
Die Verbindungen der Formel II, aus der Gruppe der Fettsäuren und Fettsäureester sind Festkörper mit niedrigem Schmelzpunkt, bzw. Öle, bei Raumtemperatur.
Neben Fettsäuren natürlichen Ursprungs bzw. deren Ester können auch synthetisch gewonnene Säuren, beispielsweise 2-Ethylhexansäure zum Einsatz kommen (vgl. Kirk-Othmer, Encyclopedia of Chemical Technology, 3rd. Ed. Vol. 4, pg. 814 - 871, J. Wiley 1978). Genannt seien insbesondere die C₈- bis C₁₄-Fettsäuren, beispielsweise die Laurinsäure Myristinsäure, 2-Ethylhexansäure sowie Mischungen von hydrierten, natürlichen Fettsäuremischungen.
Insbesondere können auch Palmitinsäure oder Stearinsäure zum Einsatz kommen. Dabei gilt in der Regel, je längerkettig die Fettsäuren, desto kleiner die Teilchen.
Bei den Verbindungen der Formel II' handelt es sich in erster Linie um Fettalkohole, hier sind insbesondere Cetylalkohl oder Talgfettalkohol zu nennen.
Erfindungsgemäß können sowohl die Verbindungen der Formel II oder der Formel II' als Medien zur Herstellung der Teilchen eingesetzt werden. Die Frage, welches Medium zu bevorzugen ist, hängt sowohl von der angestrebten Teilchengröße wie auch von der Art der Aufarbeitung ab (Aufarbeitung siehe unten).
Die erfindungsgemäß eingesetzten Monomeren M betragen gewöhnlich 20 - 60 Gew.-Teile, die als kontinuierliche Phase dienenden Verbindungen der Formel II betragen gewöhnlich 80 bis 40 Gew.-Teile und die Emulgatoren, vorzugsweise die Blockcopolymeren mit Polystyrolanteilen BCP 0,05 - 5 Gew.-Teile des Polymerisationsansatzes (wobei sich sämtliche Anteile zu 100 Gew.-Teilen ergänzen).
Insbesondere zur Verlangsamung der Polymerisation kann die Rezeptur noch 0 - 45 Gew.-%, bevorzugt 1 - 35 Gew.-% und besonders bevorzugt 2 - 20 Gew.-% eines organischen, halogenfreien Lösungsmittels enthalten.
Bevorzugte Lösungsmittel sind beispielsweise kurzkettige Ester wie Butylacetat oder Alkylaromaten wie z.B. Toluol. In der Regel bietet der Zusatz von kleinen Mengen an Lösungsmittel technische Vorteile. So können z.B. der Emulgator oder der Initiator mit Vorteil in diesen Lösungsmitteln gelöst werden.
Wie aus den Beispielen zu ersehen ist, kann man diese Lösungsmittel darüber hinaus dazu einsetzen, die Polymerisation zu verlangsamen und die Teilchengröße zu erhöhen.

Als Radikalinitiatoren IN kommen an sich bekannte, für die freiradikalische Polymerisation verwendete Initiatoren infrage (vgl. H. Rauch-Puntigam, Th. Völker, Acryl- und Methacrylverbindungen, Springer Verlag 1967) wie beispielsweise t-Butylperpivalat oder insbesondere Perkohlensäureester. Beispielsweise kommt insbesondere das Bis-(4-tert.Butylcyclohexyl)-peroxydicarbonat, daneben das Dicyclohexylperoxydicarbonat (unter dem Warenzeichen INTEROX BCHPC bzw. INTEROX CHPC 1652 der Fa. Peroxidchemie erhältlich) oder das Diisopropylperoxydicarbonat gegebenenfalls in einem geeigneten Lösungsmittel wie z.B. Butylacetat gelöst, infrage. (Vgl. Brandrup-Immergut, Polymer Handbook, 3rd. Ed. II-1, J. Wiley 1989).
Sofern es sich bei den Blockcopolymeren BCP um Styrol-Blockcopolymeren handelt, enthalten diese vorzugsweise von 30 bis zu 80 Gew.-% Polystyrolblöcke neben Polyisopren- oder Polybutadienblöcken bzw. den aus der Hydrierung von Polyisopren bzw. Polybutadien hervorgegangenen Propylen- bzw. Butylen-Einheiten. Genannt seien beispielsweise Styrol-Isopren-Blockcopolymerisate vom Typ SHELLVIS 50 der Fa. Shell bzw. K-Resin-Typen von Philips-Petroleum.

### Durchführung des Verfahrens

Bei der Durchführung des Verfahrens geht man bevorzugt von einer flüssigen, in der Regel homogenen Mischung aller Komponenten aus. Zweckmäßig wird die Mischung erwärmt und die Polymerisation durch Zugabe des Initiators IN ausgelöst. Im einzelnen bietet sich z.B. folgende Vorgehensweise an:
Die Polymerisation kann in einem für die Fällungspolymerisation geeigneten Reaktor mit Heizvorrichtung, bei kleineren Ansätzen beispielsweise einem 500 ml Dreihalskolben ausgestattet mit Kühler, Schutzgaseinleitungsvorrichtung, Thermometer und Rührer durchgeführt werden. Zweckmäßig wird unter einem Schutzgas wie z.B. Argon gearbeitet.
Man erwärmt die flüssige Mischung - als Anhalt seien ca. 70 Grad C genannt - und startet durch Zugabe des Initiators IN, beispielsweise Bis(4-tert.-Butylcyclohexyl)-peroxydicarbonat in Butylacetat. In der Regel entstehen bereits nach wenigen Minuten Teilchen, erkennbar an der Eintrübung des Polmerisationsansatzes. Im allgemeinen verläuft die Polymerisation ziemlich schnell.
Sie kann bereits nach einer halben Stunde nahezu vollständig abgelaufen sein. Sofern es sich um vernetzte Teilchen handelt, kann sich noch eine kurze Nachreaktion zur Vervollständigung der Vernetzung anschließen.
Anschließend kühlt man zweckmäßig auf ca. 60 Grad C und trennt die gebildeten Teilchen ab, beispielsweise durch Filtration bei dieser Temperatur, bei der die Verbindungen der Formeln II oder II' noch flüssig sind.
In der Regel empfiehlt es sich, den Filterkuchen nochmals nachzuwaschen, beispielsweise mit Methanol oder mit warmer, beispielsweise 1 %iger Sodalösung.
Besonders günstig gestaltet sich die unmittelbare Einarbeitung der Teilchen in Formmassen, wobei noch vorhandene Reste der Verbindungen gemäß der Formeln II oder II' als Gleit- und Trennmittel wirken.
Eine weitere Möglichkeit der Abtrennung der Verbindungen der Formeln II oder II' besteht im Abdestillieren dieser Verbindungen. Dies gilt insbesondere für Fettsäureester und die Fettalkohole.

### Vorteile der Erfindung

Von besonderem Interesse ist die breite Variationsmöglichkeit zur Steuerung der Teilchengröße.
So verfügt man über die folgenden Steuerungsgrößen:
a) Das Verhältnis von Kohlenwasserstoff- zu Carboxylgruppe in den Verbindungen der Formel II: Je längerkettig die Einheit R₂ desto kleiner die Teilchen. Entsprechend gilt für die Verbindungen gemäß Formel II': je längerkettig der Alkohol II' desto kleiner die Teilchen.
b) Die Hydrophobie der Monomeren M:
   Je besser öllöslich das Polymer, desto größer die Teilchen. So lassen sich beispielsweise durch Copolymerisation von Methylmethacrylat mit Benzyl(meth)acrylat die Teilchen vergrößern. Ähnliches gilt für Isobutyl(meth)acrylat als Comonomer.
c) Der Feststoffgehalt:
   Je höher der Feststoffgehalt der Polymerisationsansätze, desto größer die Teilchen.
d) Die Polymerisationstemperatur:
   Je höher die Polymerisationstemperatur, desto größer die Teilchen.
e) Beeinflussung über die Art und Menge des Initiators IN. Im allgemeinen gilt: je größer die Initiatorkonzentration, desto größer die Teilchen.
f) Beeinflussung über die Art und Menge des Emulgators.

Die folgenden Beispiele dienen der Erläuterung der Erfindung. Die Bestimmung der Teilchengröße geschieht mittels Lichtmikroskop.

Das verwendete Produkt Shellvis ® 50 (SAP 150) stellt ein Styrol-Isopren-Copolymer dar. Erweichungstemperatur: 110 Grad C, Relative Partikeldichte (20 Grad C): 0,83 g/cm³; Schüttgewicht: 593 kg/m³.

### BEISPIELE

### Beispiel 1

### Herstellung besonders feinteiliger Teilchen

### Medium:

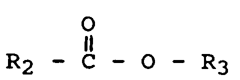

mit R₂ = CH₃ - (CH₂)₁₄, R₃ = H

Ein 250 ml-Reaktor mit Rührer, Kühler, Stickstoffeinleitung und Thermometer wird mit Stickstoff gespült und auf 70 Grad C aufgeheizt. Anschließend werden 126 g Palmitinsäure eingefüllt und aufgeschmolzen.
Danach werden 43,34 g Methylmethacrylat, 28,9 g Benzylmethacrylat und 0,9 g Shellvis ® 50 (SAP 150) zugegeben.
Nachdem die Inntentemperatur 70 Grad C erreicht hatte, wurde die Polymerisation durch Zugabe einer Lösung von 0,72 g Bis-(4-tert.Butylcyclohexyl)peroxodicarbonat in 6,58 g Butylacetat gestartet.
Bereits nach 1 Minute trübt sich der Reaktorinhalt ein, nach 3 Minuten ist der Reaktorinhalt weiß. Nach 8 Minuten ist die Innentemperatur trotz Kühlung (Außentemperatur: 65 Grad C) auf 99 Grad C angestiegen. Nach 10 Minuten Reaktionszeit wird die Außentemperatur auf 70 Grad C eingestellt. Die Innentemperatur fällt langsam ab, so daß nach ca. 20 Minuten die Innentemperatur 70 Grad C beträgt. Zur Endpolymerisation wird noch 1 Stunde bei 80 Grad C gerührt.
Man erhält eine koagulatfreie Dispersion (ca. 35 % Polymer in Palmitinsäure/Butylacetat). Die Teilchen sind sehr einheitlich. Die Teilchengröße beträgt ca. 1,1 µm (Beurteilung unter dem Lichtmikroskop).

### Beispiel 2

### Herstellung von Teilchen mit erhöhtem Teilchendurchmesser

### Medium:

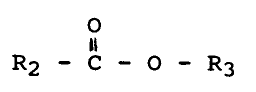

mit R₂ = CH₃ - (CH₂)₁₀-, R₃ = H

Man verfährt wie in Beispiel 1, verwendet jedoch Laurinsäure. Die Polymerisation verläuft deutlich langsamer. Das Temperaturmaximum im Reaktionskessel wird erst nach 17 Minuten erreicht. Die Temperatur steigt dabei nur auf 85 Grad C an.
Man erhält eine koagulatfreie Dispersion (ca. 35 % Polymeres in Laurinsäure/Butylacetat). Die Teilchen haben einen Durchmesser von 5 - 7 µm. Die Teilchen sind rund und haben eine glatte Oberfläche. Mehr als 90 % aller Teilchen liegen in dem angegebenen Größenbereich. Es sind weder nennenswerte Anteile an besonders feinen oder deutlich größeren Teilchen entstanden.
Zur Isolierung der Teilchen wird die Dispersion in Methanol gefällt, filtriert und mit Cyclohexan gewaschen.

### Beispiel 3

### Herstellung von vernetzten, feinen Teilchen

Man verfährt wie in Beispiel 2 (Medium: 128,4 g Laurinsäure), wählt jedoch folgende Monomerzusammensetzung:
40,35 g Methylmethacrylat, 28 g Benzylmethacrylat, 1,75 g Allylmethacrylat und initiiert die Polymerisation durch Zugabe von 0,7 g bis-(4-tert.Butylcyclohexyl)-peroxodicarbonat in 6,3 g Butylacetat bei 65 Grad C. Die Temperatur im Reaktionsgefäß steigt innerhalb von 18 Minuten auf 82 Grad C (Außentemperatur konstant bei 65 Grad C). Anschließend wird 30 Minuten bei 75 Grad C nacherhitzt.
Man erhält eine koagulatfreie Dispersion. Die Teilchen haben einen Durchmesser von ca. 3,0 µm.

### Beispiel 4

### Herstellung von vernetzten, feinen Teilchen

### Medium: Palmitinsäure + Butylacetat

In einer Apparatur gemäß Beispiel 1 werden 101,8 g Palmitinsäure aufgeschmolzen, 35,7 g Butylacetat, 35 g Methylmethacrylat, 24,8 g Benzylmethacrylat und 2,17 g Allylmethacrylat werden zugesetzt, in dieser Mischung werden 0,77 g Shellvis ® 50 (SAP 150) gelöst, der Reaktorinhalt wird auf 70 Grad C erwärmt. Durch Zugabe von 0,62 g Bis-(4-tert.Butylcyclohexyl)peroxodicarbonat in 5,58 g Butylacetat wird die Polymerisation gestartet. Die Innentemperatur steigt innerhalb von 25 Minuten auf 77 Grad C, fällt wieder ab und erreicht nach 50 Minuten vom Start der Polymerisation an wieder die Anfangstemperatur (70 Grad C). Zur Endpolymerisation wird noch 1 Stunde bei 80 Grad C gerührt.
Man erhält eine koagulatfreie Dispersion mit einem Polymergehalt von 30 %. Die Teilchen haben einen Durchmesser von ca. 4 - 4,5 µm. Es sind wenige größere oder kleinere Teilchen entstanden (s. Abb. 1).

### Beispiel 5

### Herstellung von vernetzten, feinen Teilchen mit einem Fettsäuregemisch

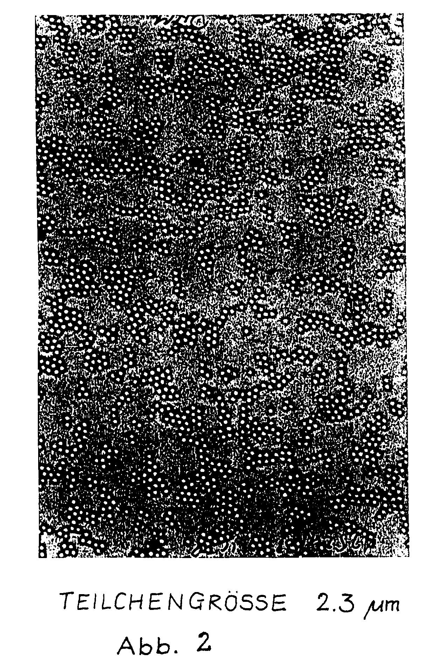

In einem Reaktor gemäß Beispiel 1 werden 132,5 g Edenor ® HK 12-18 [Fa. Henkel, Fettsäuregemisch (hydriert) bestehend aus: 2 % C₁₀, 52 % C₁₂, 22 % C₁₄, 12 % C₁₆, 12 % C₁₈-Fettsäure] aufgeschmolzen.
Anschließend werden 35 g Methylmethacrylat, 28,9 g Benzylmethacrylat, 1,81 g Allylmethacrylat zugegeben, der Emulgator: 0,9 g Shellvis ® 50 (SAP 150) unter Erwärmen gelöst. Nachdem die Innentemperatur 75 Grad C erreicht hatte, wurde die Polymerisation durch Zugabe von 0,72 g Bis-(4-tert.Butylcyclohexyl)peroxodicarbonat in 6,5 g Methylmethacrylat gestartet. Bereits nach 2 Minuten ist der Reaktorinhalt weiß. Durch intensives Kühlen wird die Innentemperatur bei 80 Grad C gehalten. Nach ca. 10 Minuten ist der größte Teil der Monomeren polymerisiert (Innentemperatur: 80,6 Grad C, Außentemperatur: 50 Grad C). Danach läßt man die Innentemperatur auf 75 Grad C fallen (Nach 15 Minuten: Innentemperatur = Außentemperatur = 75 Grad C). Anschließend wird noch 30 Minuten bei 80 Grad C gerührt (Endpolymerisation). Die Temperaturführung ist in Abb. 3 wiedergegeben.
Man erhält eine koagulatfreie, feinteilige Dispersion. Teilchendurchmesser ca. 2,3 µm (siehe Abb. 2).

### Beispiel 6

### Herstellung eines feinteiligen Perlpolymerisats in einer Fettalkohol/Butylacetat-Mischung

In einer Anlage gemäß Beispiel 1 werden 122,5 g Cetylalkohol aufgeschmolzen; es werden 15 g Butylacetat, 58,8 g Methylmethacrylat, 31, g Butylacrylat und 0,77 g Shellvis ® 50 (SAP 150) zugesetzt. Wenn der Emulgator gelöst ist und die Innentemperatur 70 Grad C erreicht hat, wird durch Zugabe von 0,62 g Bis-(4-tert.Butylcyclohexyl)-peroxodicarbonat, gelöst in 5,58 g Butylacetat die Polymerisation gestartet.
Innerhalb von ca. 2 Minuten wird der Reaktorinhalt weiß. Nach 15 Minuten ist die Innentemperatur auf 79 Grad C gestiegen. Zur Nachreaktion wird noch 80 Minuten bei 80 Grad C gerührt.
Man erhält eine koagulatfreie Dispersion. Die Teilchengröße beträgt 2,1 µm. Die Teilchen sind rund und glatt.

## Patentansprüche

1. Verfahren zur Herstellung von Poly(meth)acrylatteilchen mit einem Durchmesser von 1 - 50 µm nach dem Verfahren der Fällungspolymerisation
dadurch gekennzeichnet,
daß man die Monomeren M enthaltend zu mindestens 60 Gew.-% Monomere der Formel I 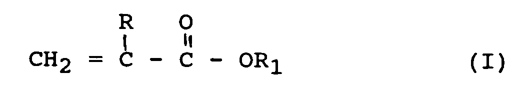 worin R Wasserstoff oder Methyl und R₁ einen Alkylrest mit 1 bis 8 Kohlenstoffatomen, einen gegebenenfalls substituierten Arylrest mit bis zu 14 Kohlenstoffatomen oder einen Aralkylrest bedeutet in einer Verbindung der Formeln II oder II' 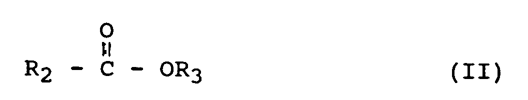 oder
R₄ - O - H (II')
worin R₂ für einen geradkettigen oder verzweigten, gesättigten Alkylrest mit 7 bis 23 Kohlenstoffatomen, R₃ für Wasserstoff oder einen geradkettigen oder verzweigten Alkylrest mit 1 bis 24 Kohlenstoffatomen und R₄ für einen geradkettigen oder verzweigten, gesättigten Alkylrest mit 10 - 22 Kohlenstoffatomen steht, als kontinuierliche Phase bei der Polymerisation und in Gegenwart eines Emulgators und eines Radikalinitiators polymerisiert.

2. Verfahren gemäß Anspruch 1, dadurch gekennzeichnet, daß die Poly(meth)acrylatteilchen im Teilchengrößenbereich (Durchmesser) 2 - 20 µm liegen.

3. Verfahren gemäß Anspruch 1, dadurch gekennzeichnet, daß die Polymerisation in einer Verbindung der Formel II durchgeführt wird.

4. Verfahren gemäß Anspruch 1, dadurch gekennzeichnet, daß die Polymerisation in einer Verbindung der Formel II' durchgeführt wird.

5. Verfahren gemäß den Ansprüchen 1 - 4, dadurch gekennzeichnet, daß als Emulgatoren Blockcopolymere mit Polystyrolanteilen eingesetzt werden.

6. Verfahren gemäß den Ansprüchen 2 - 3, dadurch gekennzeichnet, daß die Monomeren M zu mindestens 20 und bis zu 100 Gew.-% aus Methylmethacrylat bestehen.

7. Verfahren gemäß den Ansprüchen 1 - 6 dadurch gekennzeichnet, daß man 0,1 bis 20 Gew.-% bezogen auf die Monomeren M an Pfropfvernetzern copolymerisiert.

8. Verfahren gemäß den Ansprüchen 1 - 7, dadurch gekennzeichnet, daß man Aryl- oder Aralkyl(meth)acrylate mit 6 bis 14 Kohlenstoffatomen im Esterteil in Anteilen von 1 - 80 Gew.-% bezogen auf die Monomeren M copolymerisiert.

9. Verfahren gemäß den Ansprüchen 1 - 8, dadurch gekennzeichnet, daß die erhaltenen, vernetzten Kunststoffteilchen in Gegenwart von wenigstens 1 Gew.-% an Verbindungen der Formeln II oder II' bezogen auf die Teilchen in eine Kunststoffschmelze eingearbeitet werden.
